(19) Europäisches Patentamt
European Patent Office
Office européen des brevets

(11) **EP 4 528 867 A1**

(12) **EUROPEAN PATENT APPLICATION**

(43) Date of publication:
**26.03.2025 Bulletin 2025/13**

(21) Application number: **24201703.6**

(22) Date of filing: **20.09.2024**

(51) International Patent Classification (IPC):
*H01M 10/05* (2010.01)    *H01M 10/058* (2010.01)
*H01M 10/0587* (2010.01)    *H01M 50/474* (2021.01)
*H01M 50/486* (2021.01)    *H01M 50/126* (2021.01)
*H01M 50/586* (2021.01)    *H01M 50/593* (2021.01)
*H01M 50/129* (2021.01)

(52) Cooperative Patent Classification (CPC):
**H01M 10/058; H01M 10/05; H01M 10/0587;
H01M 50/126; H01M 50/474; H01M 50/486;**
H01M 50/129; H01M 50/586; H01M 50/593;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.09.2023 CN 202311224138**

(71) Applicant: **Dongguan Amperex Technology
Limited
Dongguan City, Guangdong Province 523000
(CN)**

(72) Inventor: **FANG, Dekai
Dongguan City, Guangdong Province, People s
Republic of China, 523000 (CN)**

(74) Representative: **Icosa
83 avenue Denfert-Rochereau
75014 Paris (FR)**

(54) **SECONDARY BATTERY AND ELECTRONIC APPARATUS**

(57)    A secondary battery (100) is arc-shaped and includes an electrode assembly (20) and a housing (10). The separator (22) is arranged between the positive electrode plate (21) and the negative electrode plate (23), the first positive electrode plate (21a) on the outermost layer of the electrode assembly (20), the first negative electrode plate (23a) adjacent to the first positive electrode plate (21a) along an arc extension direction of the secondary battery (100), the first negative electrode plate (23a) has a first region (231) beyond an edge of the first positive electrode plate (21a), the first insulator (24) is arranged on a first separator (22a) for separating the first negative electrode plate (23a) and the first positive electrode plate (21a), and viewed along a thickness direction of the electrode assembly (20), the first insulator (24) and the first region (231) at least partially overlap. The housing (10) is used for accommodating the electrode assembly (20) and includes an aluminum layer (12).

FIG. 3

**EP 4 528 867 A1**

## Description

## TECHNICAL FIELD

This application relates to the technical field of electrochemical energy storage, and in particular, to a secondary battery and an electronic apparatus.

## BACKGROUND

Along with the development of an electrochemical energy storage technology, there are increasing requirements for the safety performance and cycling performance of secondary batteries (e.g., lithium-ion batteries). For example, the requirements for the safety performance of the secondary batteries are constantly increasing. Therefore, further improvements in this aspect are expected.

## SUMMARY

This application provides a secondary battery and an electronic apparatus, which have higher safety performance.

This application is achieved by means of the following technical solution:

In a first aspect, an embodiment of this application provides a secondary battery. The secondary battery is arc-shaped and includes an electrode assembly and a housing. The electrode assembly includes a positive electrode plate, a separator, a negative electrode plate and a first insulator, the separator is arranged between the positive electrode plate and the negative electrode plate, an electrode plate on the outermost layer of the electrode assembly is a first positive electrode plate, an electrode plate adjacent to the first positive electrode plate is a first negative electrode plate, along an arc extension direction of the secondary battery, the first negative electrode plate has a first region beyond an edge of the first positive electrode plate, the first insulator is arranged on a first separator for separating the first negative electrode plate and the first positive electrode plate, and viewed along a thickness direction of the electrode assembly, the first insulator and the first region at least partially overlap. The housing is used for accommodating the electrode assembly and includes an aluminum layer.

According to the secondary battery of the embodiment of this application, the positive electrode plate and the negative electrode plate are arranged in a stacked manner, the first positive electrode plate is the electrode plate on the outermost layer of the electrode assembly, i.e., the first positive electrode plate is the electrode plate of the electrode assembly that is located at the outermost side of the arc, in the arc extension direction of the secondary battery, a first region of the first negative electrode plate is beyond the edge of the first positive electrode plate, and the first insulator is arranged on the first separator for separating the first negative electrode plate and the first positive electrode plate. Moreover, viewed along the thickness direction of the electrode assembly, the first insulator and the first region at least partially overlap, and the first insulator can play a shielding role for burrs of the first negative electrode plate, thereby reducing the risk of the burrs lapping with the aluminum layer of the housing, so that the secondary battery has higher safety performance.

According to some embodiments of this application, the first insulator is beyond an edge of the first negative electrode plate along the arc extension direction of the secondary battery.

In the above-mentioned solution, the first insulator is beyond the edge of the first negative electrode plate along the arc extension direction of the secondary battery, thereby having a better shielding effect for the burrs of the first negative electrode plate, so as to reduce the risk of the burrs making contact with the aluminum layer of the housing.

According to some embodiments of this application, the first insulator includes a first portion and a second portion, the first portion is arranged on the first separator, and the second portion is arranged on the first positive electrode plate.

In the above-mentioned solution, the first portion is arranged on the first separator, and the second portion is arranged on the first positive electrode plate, which facilitates connection and positioning of the first insulator and the first separator, thereby reducing the risk of movement of the first insulator along with the first separator.

According to some embodiments of this application, along the thickness direction of the electrode assembly, the first insulator has a dimension of H1, the first separator has a dimension of H2, and $30 \ \mu m \le H1 + H2 \le 65.6 \ \mu m$.

In the above-mentioned solution, the dimension H1 of the first insulator along the thickness direction of the electrode assembly and the dimension H2 of the first separator along the thickness direction of the electrode assembly satisfy the above-mentioned relationship ($30 \ \mu m \le H1 + H2 \le 65.6 \ \mu m$), so that, on the one hand, both the first insulator and the first separator have a better shielding effect for the burrs of the first negative electrode plate, and can reduce the risk that the burrs of the first negative electrode plate will pierce the first separator and the first insulator and then make contact with the aluminum layer of the housing; and on the other hand, a smaller assembly space is occupied.

According to some embodiments of this application, $6 \ \mu m \le H1 \le 15.5 \ \mu m$.

In the above-mentioned solution, the dimension H1 of the first insulator along the thickness direction of the electrode assembly satisfies the above-mentioned relationship ($6 \ \mu m \le H1 \le 15.5 \ \mu m$), along the thickness direction of the electrode assembly, the first insulator has a better shielding effect for the burrs of the first negative electrode plate, the burrs are not prone to pierce the first insulator, and a space occupied by the first insulator in the thickness direction of the electrode assembly is smaller.

According to some embodiments of this application, 6 μm ≤ H2 ≤ 15.5 μm.

In the above-mentioned solution, the dimension H2 of the first separator along the thickness direction of the electrode assembly satisfies the above-mentioned relationship (6 μm ≤ H2 ≤ 15.5 μm), along the thickness direction of the electrode assembly, the first separator has a better shielding effect for the burrs of the first negative electrode plate, the burrs are not prone to pierce the first separator, and a space occupied by the first separator in the thickness direction of the electrode assembly is smaller.

According to some embodiments of this application, the first insulator is an adhesive layer coated on the first separator.

In the above-mentioned solution, the first insulator is the adhesive layer coated on the first separator, which facilitates processing; and the adhesive layer and the separator together shield the burrs of the first negative electrode plate, thereby reducing the risk of the burrs making contact with the aluminum layer of the housing after piercing the first separator and the adhesive layer.

According to some embodiments of this application, the adhesive layer is one or more of a polyolefin adhesive layer, a rubber-based adhesive layer, or a cyanoacrylate-based adhesive layer.

In the above-mentioned solution, the adhesive layer is one or more of the polyolefin adhesive layer, the rubber-based adhesive layer, or the cyanoacrylate-based adhesive layer, and has high temperature resistance and low dissolution performance, components in the adhesive layer are not prone to be integrated into an electrolyte solution after high-temperature and long-time immersion, and the adhesive layer has good adhesion and high stability.

According to some embodiments of this application, the first insulator is an adhesive tape bonded to the first separator.

In the above-mentioned solution, the first insulator is an adhesive tape bonded to the first separator, which is simple in structure and convenient to operate.

According to some embodiments of this application, peel strength between the adhesive tape and the first separator is greater than 0.1 N/mm.

In the above-mentioned solution, the peel strength between the adhesive tape and the first separator is greater than 0.1 N/mm, thereby reducing the risk of detachment of the adhesive tape and the first separator.

According to some embodiments of this application, the housing is an aluminum-plastic film, and the aluminum-plastic film includes a protective layer, an aluminum layer and a sealing layer which are arranged in a stacked manner.

In the above-mentioned solution, the aluminum-plastic film has good strength and flexibility to meet the use demands.

According to some embodiments of this application, the sealing layer includes at least one of polyethylene terephthalate, polyvinyl chloride, polyethylene or polypropylene.

In the above-mentioned solution, the polyethylene terephthalate, the polyvinyl chloride, the polyethylene or the polypropylene has good sealing performance.

According to some embodiments of this application, the sealing layer has a thickness of 20 μm to 40 μm.

In the above-mentioned solution, the sealing layer has a certain thickness, so as to reduce the risk of the burrs making contact with the aluminum layer. Moreover, the overall thickness of the housing is small, so that the secondary battery has a higher volume energy density.

According to some embodiments of this application, the secondary battery further includes tabs, and the tabs are disposed at one end of the arc extension direction of the secondary battery.

In the above-mentioned solution, the tabs are disposed at one end of the arc extension direction of the secondary battery, so that the secondary battery is conveniently electrically connected to an external component.

According to some embodiments of this aplication, the electrode assembly is of a laminated structure. The first negative electrode plate has two first regions and two second regions which are beyond the edge of the first positive electrode plate, the two first regions are respectively disposed at two ends of the first negative electrode plate along the arc extension direction of the secondary battery, before the first negative electrode plate is bent, the two first regions are respectively disposed at two ends of the first negative electrode plate along a first direction, the two second regions are respectively disposed at two ends of the first negative electrode plate along a second direction, the first direction is perpendicular to the second direction, two first insulators are provided, the two first insulators are oppositely arranged along the first direction, the electrode assembly further includes two second insulators which are oppositely arranged along the second direction, the second insulators are arranged on the first separator, and viewed along the thickness direction of the electrode assembly, each of the first insulators and the corresponding first region at least partially overlap, and each of the second insulators and the corresponding second region at least partially overlap.

In the above-mentioned solution, the electrode assembly is of the laminated structure, the first negative electrode plate is beyond the first positive electrode plate at the periphery of the first positive electrode plate, so that the secondary battery has higher safety performance.

According to some embodiments of this application, the first negative electrode plate has the first regions at two ends of the arc extension direction of the secondary battery, two first insulators are provided, and viewed in the thickness direction of the electrode assembly, each of the first insulators and the corresponding first region at least partially overlap.

In the above-mentioned solution, the first negative electrode plate has the first regions at two ends of the arc extension direction of the secondary battery, so as to meet Overhang in the arc extension direction of the secondary battery. Each of the first insulators and the corresponding first region at least partially overlap, so as to play a shielding role on the burrs of the first negative electrode plate in two different directions, and reduce the risk of the burrs making contact with the aluminum layer of the housing.

In a second aspect, an embodiment of this application provides an electronic apparatus, including the secondary battery provided according to any one of the above embodiments.

Additional aspects and advantages of this application will be given, in part, in the following description, in part as will become apparent from the following description, or as will be learned through the practice of this application.

## BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.

FIG. 1 is a schematic structural diagram of a secondary battery according to some embodiments of this application;
FIG. 2 is an assembly schematic diagram of a first positive electrode plate, a first separator and a first negative electrode plate according to some embodiments of this application;
FIG. 3 is a close-up view of a part A shown in FIG. 2;
FIG. 4 is an assembly schematic diagram of a first positive electrode plate, a first separator and a first negative electrode plate according to some other embodiments of this application;
FIG. 5 is a close-up view of a part B shown in FIG. 4;
FIG. 6 is a schematic structural diagram of a housing according to some embodiments of this application;
FIG. 7 is a schematic diagram of a first positive electrode and a first negative electrode plate according to some embodiments of this application before bending;
FIG. 8 is a schematic structural diagram of an electrode assembly according to some embodiments of this application;
FIG. 9 is a schematic diagram of a first positive electrode and a first negative electrode plate according to some other embodiments of this application before bending; and
FIG. 10 is a schematic structural diagram of an electrode assembly according to some other embodiments of this application.

Reference numerals: 100-secondary battery; 10-housing; 11-protective layer; 12-aluminum layer; 13-sealing layer; 20-electrode assembly; 21-positive electrode plate; 21a-first positive electrode plate; 22-separator; 22a-first separator; 23-negative electrode plate; 23a-first negative electrode plate; 231-first region; 232-second region; 24-first insulator; 241-first portion; 242-second portion; 25-second insulator; 30-tab; 30a-positive tab; 30b-negative tab; W-arc extension direction of secondary battery; X-first direction; Y-second direction; and Z-thickness direction of electrode assembly.

## DETAILED DESCRIPTION

In order to make objectives, technical solutions and advantages of embodiments of this application clearer, the technical solutions in embodiments of this application will be clearly and completely described below in conjunction with accompanying drawings in the embodiments of this application. Apparently, the described embodiments are merely some rather than all of the embodiments of this application. Based on the embodiments in this application, all other embodiments obtained by a person of ordinary skill in the art without creative labor shall fall within the scope of protection of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms "first", "second", etc. in the specification and claims of this application or in the accompanying drawings described above are used to distinguish between different objects, and are not used to describe a particular order or relationship of priority.

Reference herein to "embodiment(s)" means that specific features, structures or characteristics described with reference to the embodiment(s) may be incorporated in at least one embodiment of this application. The word "embodiment(s)" appearing in various positions in the specification does not necessarily refer to the same embodiment or an independent or alternative embodiment that is exclusive of other embodiments. It is explicitly or implicitly understood by a person skilled in the art that the embodiments described herein may be combined with other embodiments.

In the description of this application, it is hereby noted that, unless otherwise expressly specified and limited, terms "mount", "connected", "connect", "attach" and the like are to be understood in a broad sense, for example, it may be a fixed connection, or a detachable connection, or an integral connection; and it may be a direct connection or indirect connection through an intermediate medium, and may be the interior communication between two elements. For a person of ordinary skill in the art, the specific meaning of the forgoing terms in this application may be understood according to specific circumstances.

The term "and/or" in this application indicates merely a relation for describing the related objects, and represents three possible relationships. For example, "A and/or B" may represent the following three circumstances: A alone, both A and B, and B alone. In addition, the character "/" in this application generally indicates an "or" relationship between the front and back related objects.

"A plurality of" referred to in this application means two or more (including two). Similarly, "a plurality of groups" means two or more groups (including two groups), and "a plurality of pieces" means two or more pieces (including two pieces).

In some embodiments, in order to solve the use demands, a secondary battery is arc-shaped. For example, the secondary battery is arched on one side in a thickness direction of an electrode assembly and the secondary battery is recessed on the other side in the thickness direction of the electrode assembly. The electrode assembly is accommodated in a housing, and the housing has an aluminum layer. In the manufacturing process of electrode plates, burrs are generated at the edges of the electrode plates due to cutting. However, in the secondary battery, a negative electrode plate usually is beyond the edge of a positive electrode plate to meet the safety performance requirements. However, after the secondary battery is bent to be arc-shaped, due to the stretching of a separator and the housing during the bending of the secondary battery, the separator is prone to be pierced by the burrs of the negative electrode plate, which makes the burrs prone to lap with the aluminum layer of the housing, easily leading to the corrosion and leakage of liquid from the housing, and making the secondary battery with low safety performance.

In view of this, this application provides a secondary battery. An electrode plate on the outermost layer of an electrode assembly is a first positive electrode plate, an electrode plate adjacent to the first positive electrode plate is a first negative electrode plate, along an arc extension direction of the secondary battery, the first negative electrode plate has a first region beyond an edge of the first positive electrode plate, a first insulator is arranged on a first separator between the first negative electrode plate and the first positive electrode plate, and viewed along a thickness direction of the electrode assembly, the first insulator and the first region at least partially overlap, so that the first insulator overlaps the edge of the first negative electrode plate, the first insulator can shield the burrs of the first negative electrode plate, thereby reducing the risk of the burrs lapping with an aluminum layer of a housing, and making the secondary battery with higher safety performance.

The following describes the structure of the secondary battery of the embodiment of this application with reference to drawings.

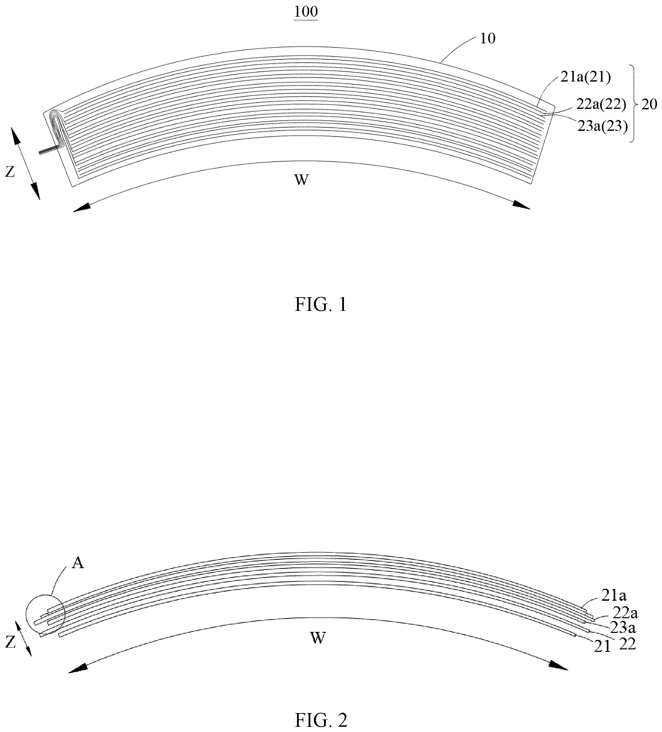

Referring to FIG. 1 to FIG. 3, an embodiment of this application provides a secondary battery 100. The secondary battery 100 is arc-shaped. The secondary battery 100 includes an electrode assembly 20 and a housing 10. The electrode assembly 20 includes positive electrode plates 21, a separator 22, negative electrode plates 23 and a first insulator 24, the separator 22 is arranged between the positive electrode plate 21 and the negative electrode plate 23, an electrode plate on the outermost layer of the electrode assembly 20 is a first positive electrode plate 21a, an electrode plate adjacent to the first positive electrode plate 21a is a first negative electrode plate 23a, along an arc extension direction W of the secondary battery 100, the first negative electrode plate 23a has a first region 231 beyond an edge of the first positive electrode plate 21a, the first insulator 24 is arranged on a first separator 22a for separating the first negative electrode plate 23a and the first positive electrode plate 21a, and viewed along a thickness direction Z of the electrode assembly 20, the first insulator 24 and the first region 231 at least partially overlap. The housing 10 is used for accommodating the electrode assembly 20 and includes an aluminum layer.

In the electrode assembly 20, a plurality of electrode plates are arranged in a stacked manner along the thickness direction Z of the electrode assembly 20, and the separator 22 is arranged between the positive electrode plate 21 and the negative electrode plate 23 adjacent to each other to insulate and separate the positive electrode plate 21 and the negative electrode plate 23.

The electrode plate on the outermost layer of the electrode assembly 20 refers to, in the thickness direction Z of the electrode assembly 20, a layer of electrode plate of a plurality of layers of electrode plates of the electrode assembly 20 that is furthest away from the center of the arc of the secondary battery 100.

The first negative electrode plate 23a is the electrode plate adjacent to the first positive electrode plate 21a, that is, the electrode plate of the electrode assembly 20 that is close to the outermost layer.

The first separator 22a is the separator 22 arranged between the first positive electrode plate 21a and the first negative electrode plate 23a, and used for insulating and separating the first positive electrode plate 21a and the first negative electrode plate 23a.

The first region 231 is a region of the first negative electrode plate 23a that is beyond the edge of the first positive electrode plate 21a in the arc extension direction W of the secondary battery 100, and burrs are formed at the edge of the first region 231.

The first insulator 24 is a component having an electrical insulation function. Viewed along the thickness direction Z of the electrode assembly 20, the first insulator 24 and the first region 231 at least partially overlap, or, the first insulator 24 overlaps a portion of the first region 231, or, the first insulator 24 overlaps all of the first region 231. That is, viewed along the thickness direction Z of the electrode assembly 20, a positive projection of the first insulator 24 and a positive projection of the first region 231 at least partially overlap.

In some embodiments of this application, the projection of the first region 231 in the thickness direction Z may partially fall onto the first insulator 24, or the projection of the first region 231 in the thickness direction Z may all fall onto the first insulator 24. When the projection of the first region 231 in the thickness direction Z partially falls onto the first insulator 24, the projection of at least the outer edge of the first region 231 falls onto the first insulator 24, and since the burrs are mainly generated at the outer edge of the first region 231, at least the burrs on the outer edge of the first region 231 can be shielded by the first insulator 24, thereby reducing the risk of the burrs lapping with the aluminum layer of the housing 10.

The housing 10 has an accommodation space to accommodate the electrode assembly 20. The housing 10 includes an aluminum layer, so that the housing 10 has certain strength and further isolate water vapor. The aluminum layer may be made of aluminum or other metals, such as stainless steel.

The housing 10 may include an aluminum-plastic film or an aluminum shell.

According to the secondary battery 100 of the embodiment of this application, viewed along the thickness direction Z of the electrode assembly 20, the first insulator 24 and the first region 231 at least partially overlap, and the first insulator 24 can shield the burrs of the first negative electrode plate 23a, and can play a shielding role for the burrs of the first negative electrode plate 23a, thereby reducing the risk of the burrs lapping with the aluminum layer of the housing 10, so that the secondary battery 100 has higher safety performance.

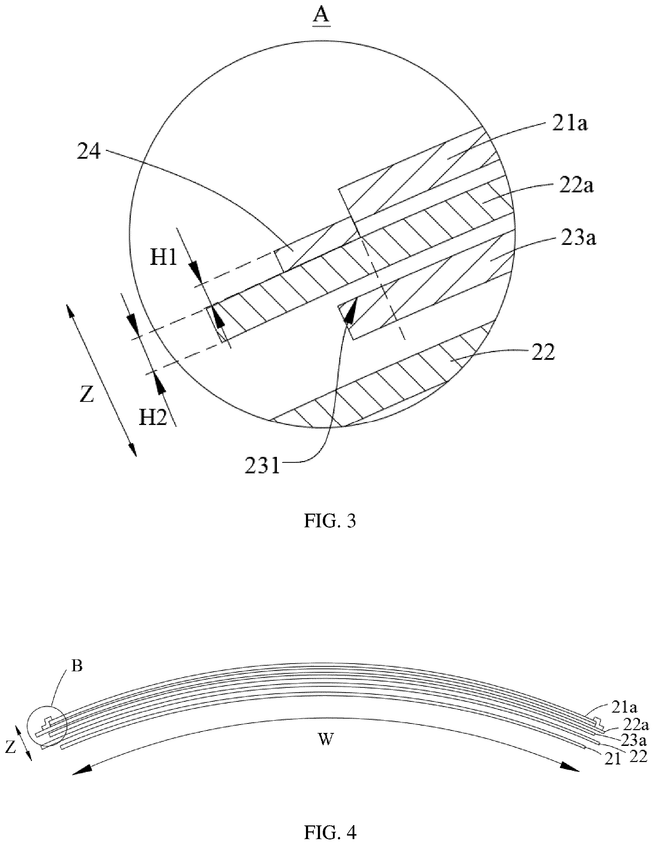

Referring to FIG. 2 and FIG. 3, according to some embodiments of this application, the first insulator 24 may be beyond the edge of the first negative electrode plate 23a along the arc extension direction W of the secondary battery 100.

Along the arc extension direction W of the secondary battery 100, the end portion of the first insulator 24 may be beyond the edge of the first negative electrode plate 23a, that is, viewed along the thickness direction Z of the electrode assembly 20, the first insulator 24 shields the edge of the first negative electrode plate 23a.

In the above-mentioned solution, the first insulator 24 is beyond the edge of the first negative electrode plate 23a along the arc extension direction W of the secondary battery 100, thereby improving the shielding effect of the first insulator 24 for the burrs at the edge of the first negative electrode plate 23a, reducing the possibility of the burrs making contact with the aluminum layer of the housing 10, and accordingly reducing the risk of the burrs making contact with the aluminum layer of the housing 10.

According to some embodiments of this application, along the arc extension direction W of the secondary battery 100, the edge of the first insulator 24 may be flush with the edge of the first negative electrode plate 23a, and the first insulator 24 may also shield the burrs of the first negative electrode plate 23a, thereby reducing the risk of the burrs making contact with the aluminum layer of the housing 10.

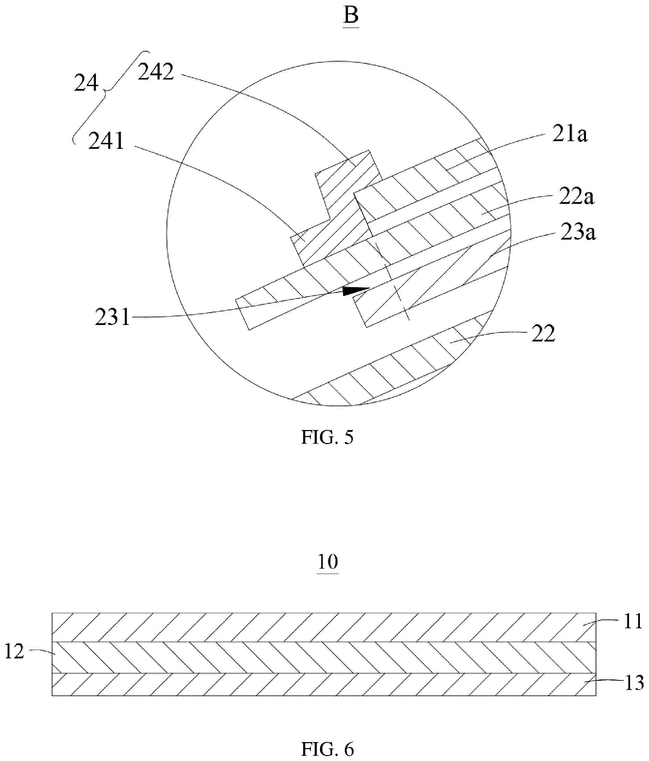

Referring to FIG. 4 and FIG. 5, according to some embodiments of this application, the first insulator 24 includes a first portion 241 and a second portion 242, the first portion 241 is arranged on the first separator 22a, and the second portion 242 is arranged on the first positive electrode plate 21a.

The first portion 241 and the second portion 242 are two portions of the first insulator 24 that are connected to each other. The first portion 241 is used for being connected to the first separator 22a, and the second portion 242 is used for being connected to the first positive electrode plate 21a to realize that the first insulator 24 is connected to the first separator 22a and the first positive electrode plate 21a respectively.

In the above-mentioned solution, the second portion 242 is connected to the first positive electrode plate 21a first, and then the first portion 241 is connected to the first separator 22a, which facilitates connection and positioning of the first insulator 24 and the first separator 22a, and meanwhile can reduce the risk of movement of the first insulator 24 along with the first separator 22a.

Referring to FIG. 3, according to some embodiments of this application, along the thickness direction Z of the electrode assembly 20, the first insulator 24 has a dimension of H1, the first separator 22a has a dimension of H2, and $30~\mu m \le H1 + H2 \le 65.6~\mu m$.

The thickness direction of the first insulator 24 may be parallel with the thickness direction Z of the electrode assembly 20. In some embodiments, H1 may also be a thickness of the first insulator 24, and H2 may also be a thickness of the first separator 22a.

H1 + H2 is the sum of the dimension of the first insulator 24 along the thickness direction Z of the electrode assembly 20 and the dimension of the first separator 22a along the thickness direction Z of the electrode assembly 20.

Optionally, H1 + H2 may be 30 $\mu m$, 35 $\mu m$, 40 $\mu m$, 45 $\mu m$, 50 $\mu m$, 55 $\mu m$, 60 $\mu m$, 65 $\mu m$, 65.6 $\mu m$, etc.

In the above-mentioned solution, the dimension H1 of the first insulator 24 along the thickness direction Z of the electrode assembly 20 and the dimension H2 of the first separator 22a along the thickness direction Z of the electrode assembly 20 satisfy the above-mentioned relationship ($30~\mu m \le H1 + H2 \le 65.6~\mu m$), so that, on the one hand, both the first insulator 24 and the first separator 22a have a better shielding effect for the burrs of the first negative electrode plate 23a, and can reduce the risk that the burrs of the first negative electrode plate 23a will pierce the first separator 22a and the first insulator 24 and then make contact with the aluminum layer of the housing 10; and on the other hand, a smaller assembly space is occupied.

According to some embodiments of this application, 6 μm ≤ H1 ≤ 15.5 μm.

Optionally, H1 may be 6 μm, 7 μm, 8 μm, 9 μm, 10 μm, 11 μm, 12 μm, 13 μm, 14 μm, 15 μm, 15.5 μm, etc.

In the above-mentioned solution, the dimension H1 of the first insulator 24 along the thickness direction Z of the electrode assembly 20 satisfies the above-mentioned relationship (6 μm ≤ H1 ≤ 15.5 μm), along the thickness direction Z of the electrode assembly 20, the first insulator 24 has a better shielding effect for the burrs of the first negative electrode plate 23a, the burrs are not prone to pierce the first insulator 24, and a space occupied by the first insulator 24 in the thickness direction Z of the electrode assembly 20 is smaller.

According to some embodiments of this application, 6 μm ≤ H2 ≤ 15.5 μm.

Optionally, H2 may be 6 μm, 7 μm, 8 μm, 9 μm, 10 μm, 11 μm, 12 μm, 13 μm, 14 μm, 15 μm, 15.5 μm, etc.

In the above-mentioned solution, the dimension H2 of the first separator 22a along the thickness direction Z of the electrode assembly 20 satisfies the above-mentioned relationship (6 μm ≤ H2 ≤ 15.5 μm), along the thickness direction Z of the electrode assembly 20, the first separator 22a has a better shielding effect for the burrs of the first negative electrode plate 23a, the burrs are not prone to pierce the first separator 22a, and a space occupied by the first separator 22a in the thickness direction Z of the electrode assembly 20 is smaller.

According to some embodiments of this application, the first insulator 24 may be disposed on one side of the first separator 22a that is back away from the first negative electrode plate 23a. When the first insulator 24 is assembled with the first separator 22a, the first insulator 24 may be connected to the first separator 22a after the positive electrode plate 21 and the negative electrode plate 23 are arranged in a stacked manner; or, the first insulator 24 may be connected to the first separator 22a first, and then the first separator 22a with the first insulator 24 attached may cover the outer side of the first negative electrode plate 23a, and then the first positive electrode plate 21a covers one side of the first separator 22a that is back away from the first negative electrode plate 23a.

According to some embodiments of this application, the first insulator 24 may be disposed on one side of the first separator 22a facing the first negative electrode plate 23a. When the first insulator 24 is assembled with the first separator 22a, the first insulator 24 may be connected to the first separator 22a after the positive electrode plate 21 and the negative electrode plate 23 are arranged in a stacked manner, at which time it is necessary to lift up the first separator 22a, connect the first insulator 24 to the first separator 22a, and then cover the first negative electrode plate 23 with the first separator 22a; or, the first insulator 24 may be first connected to the first separator 22a, and then the first separator 22a attached to the first insulator 24 covers the outer side of the first negative electrode plate 23a, and then the first positive electrode plate 21a covers one side of the first separator 22a that is back away from the first negative electrode plate 23a.

According to some embodiments of this application, the first insulator 24 is an adhesive layer coated on the first separator 22a.

The adhesive layer may be formed by applying a high-viscosity adhesive uniformly to the first separator 22a by means of a gluing machine.

The adhesive layer may be in a variety of forms, the adhesive layer may be in a continuous form, and the adhesive layer may also be in an interrupted form.

In the above-mentioned solution, the first insulator 24 is the adhesive layer coated on the first separator 22a, which facilitates processing; and the adhesive layer and the separator 22 together shield the burrs of the first negative electrode plate 23a, thereby reducing the risk of the burrs making contact with the aluminum layer of the housing 10 after piercing the first separator 22a and the adhesive layer.

Factors affecting the uniformity of the adhesive layer may include a dispensing trajectory, a dispensing speed, etc. During the dispensing operation of the gluing machine, the uniformity of the dispensing can be automatically recognized by taking pictures with a visual CCD (Charge-coupled Device) camera and comparing them with a basic photo library.

According to some embodiments of this application, the adhesive layer is one or more of a polyolefin adhesive layer, a rubber-based adhesive layer, or a cyanoacrylate-based adhesive layer.

In the above-mentioned solution, the adhesive layer is one or more of the polyolefin adhesive layer, the rubber-based adhesive layer, or the cyanoacrylate-based adhesive layer, and has high temperature resistance and low dissolution performance, components in the adhesive layer are not prone to be integrated into an electrolyte solution after high-temperature and long-time immersion, and the adhesive layer has good adhesion and high stability.

According to some embodiments of this application, the first insulator 24 is an adhesive tape bonded to the first separator 22a.

The adhesive tape includes a substrate and an adhesive layer, the substrate and the adhesive layer are insulating materials, and the substrate is connected to the first separator 22a through the adhesive layer.

In the above-mentioned solution, the first insulator 24 is an adhesive tape bonded to the first separator 22a, which is simple in structure and convenient to operate.

According to some embodiments of this application, peel strength between the adhesive tape and the first separator 22a is greater than 0.1 N/mm.

In the above-mentioned solution, the peel strength between the adhesive tape and the first separator 22a is greater than 0.1 N/mm, thereby reducing the risk of detachment of the adhesive tape and the first separator 22a.

Measurement of peel strength is:

GB/T 2792-2014 Measurement of Peel Adhesion Properties for Adhesive Tapes is used to test the peel strength of binders of lithium-ion batteries.

The first insulator bonded to the first separator is cut into a strip sample of 0.2 mm x 0.6 mm, the length value of which can be adjusted proportionally according to the actual situation;

> along the length direction of the above sample, the sample is attached to a steel plate by means of double-sided adhesive tape (Nitto 5000NS), where the attachment length is not less than 0.4 mm; and the steel plate is fixed in the corresponding position of a GoTech tensile machine, the other end of the first separator of the sample that is not adhered to the first insulator is pulled up, and the sample is put into a chuck to be clamped, where an included angle between the part of the sample that is pulled up and the steel plate in the space is 180°, the chuck pulls the sample at the speed of $5 \pm 0.2$ mm/s, and the ultimately measured average value of the tension in the smooth region is recorded as the peel strength.

Referring to FIG. 6, according to some embodiments of this application, the housing 10 is an aluminum-plastic film, and the aluminum-plastic film includes a protective layer 11, an aluminum layer 12 and a sealing layer 13 which are arranged in a stacked manner.

The protective layer 11, the aluminum layer 12 and the sealing layer 13 are arranged in a stacked manner sequentially from outside to inside.

The protective layer 11 is made of nylon, and has good abrasion resistance.

The aluminum-plastic film has high barrier properties, good cold press formability, puncture resistance, electrolyte solution resisting stability, and electrical properties (including insulating property).

In the above-mentioned solution, the aluminum-plastic film has good strength and flexibility to meet the use demands.

According to some embodiments of this application, the sealing layer 13 includes at least one of polyethylene terephthalate, polyvinyl chloride, polyethylene or polypropylene.

In the above-mentioned solution, the polyethylene terephthalate, the polyvinyl chloride, the polyethylene or the polypropylene has good sealing performance.

According to some embodiments of this application, the sealing layer 13 has a thickness of 20 μm to 40 μm.

The thickness of the sealing layer 13 may be 20 μm, 22 μm, 24 μm, 26 μm, 28 μm, 30 μm, 32 μm, 34 μm, 36 μm, 38 μm, 40 μm, etc.

In the above-mentioned solution, the sealing layer 13 has a certain thickness, so as to reduce the risk of the burrs making contact with the aluminum layer 12. Moreover, the overall thickness of the housing 10 is small, so that the secondary battery 100 has a higher volume energy density.

Referring to FIG. 1, according to some embodiments of this application, the secondary battery 100 further includes tabs 30, and the tabs 30 are disposed at one end of the arc extension direction W of the secondary battery 100.

The tabs 30 are disposed at one end of the arc extension direction W of the secondary battery 100, this end may be the head portion of the secondary battery 100, and the tabs 30 are connected to a conductive member, so as to be conveniently electrically connected to an external component, and guide out electric energy of the electrode assembly 20.

The tabs 30 include a positive tab 30a and a negative tab 30b, the positive tab 30a is used for being electrically connected to the positive electrode plate 21, and the negative tab 30b is used for being electrically connected to the negative electrode plate 23.

The tabs 30 may be welded to the corresponding electrode plates, so as to achieve electrical connection between the tabs 30 and the corresponding electrode plates.

In the above-mentioned solution, the tabs 30 are disposed at one end of the arc extension direction W of the secondary battery 100, so that the secondary battery 100 is conveniently electrically connected to an external component.

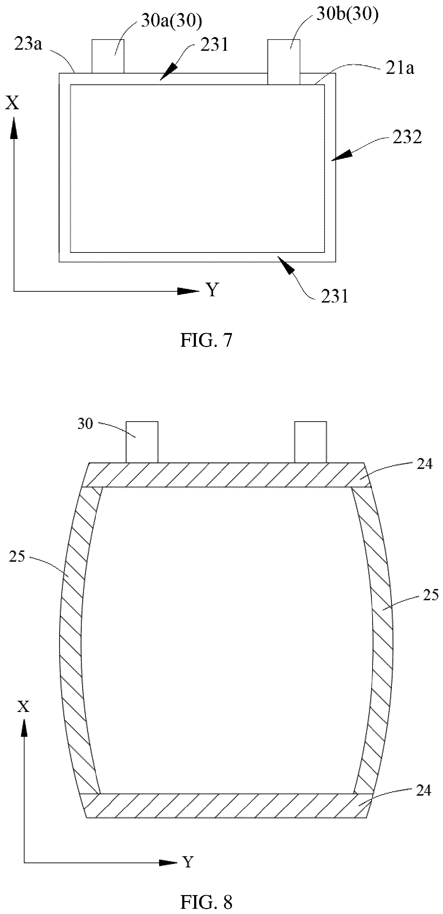

Referring to FIG. 7 and FIG. 8, according to some embodiments of this application, the electrode assembly 20 is of a laminated structure. The first negative electrode plate 23a has two first regions 231 and two second regions 232 which are beyond the edge of the first positive electrode plate 21a, the two first regions 231 are respectively disposed at two ends of the first negative electrode plate 23a along the arc extension direction W of the secondary battery 100, before the first negative electrode plate 23a is bent, the two first regions 231 are respectively disposed at two ends of the first negative electrode plate 23a along a first direction X, the two second regions 232 are respectively disposed at two ends of the first negative electrode plate 23a along a second direction Y, the first direction X is perpendicular to the second direction Y, two first insulators 24 are provided, the two first insulators 24 are oppositely arranged along the first direction X, the electrode assembly 20 further includes two second insulators 25 which are oppositely arranged along the second direction Y, the second insulators 25 are arranged on the first separator 22a, and viewed along the thickness direction Z of the electrode assembly 20, each of the first insulators 24 and the corresponding first region 231 at least partially overlap, and each of the second insulators 25 and the corresponding second region 232 at least partially overlap.

Before the electrode assembly 20 is bent, the first negative electrode plate 23a and the first positive electrode plate 21a may both be square. The two first regions 231 may be distributed at opposite ends of the first negative electrode plate 23a in the width direction thereof, and the first direction X may be parallel to the width direction of the first negative electrode plate 23a. The two second regions 232 may be distributed at opposite ends of the first negative electrode plate 23a in the length direction thereof, and the second direction Y may be parallel to the length direction of the first negative electrode plate 23a.

The second insulators 25 may be constructed and provided in the same manner as the first insulators 24.

In the above-mentioned solution, the electrode assembly 20 is of the laminated structure, the first negative electrode plate 23a is beyond the first positive electrode plate 21a at the periphery of the first positive electrode plate 21a, so as to meet Overhang requirements, so that the secondary battery 100 has higher safety performance.

According to some embodiments of this application, the electrode assembly 20 is a winding structure.

When the electrode assembly 20 is formed, the positive electrode plate 21 and the negative electrode plate 23 are stacked and wound to be a flat structure, and after winding, the electrode assembly 20 is bent, so that the electrode assembly 20 is arc-shaped.

When the electrode assembly 20 is the winding structure, the first regions 231 are disposed at end portions in the width direction of the first negative electrode plate 23a.

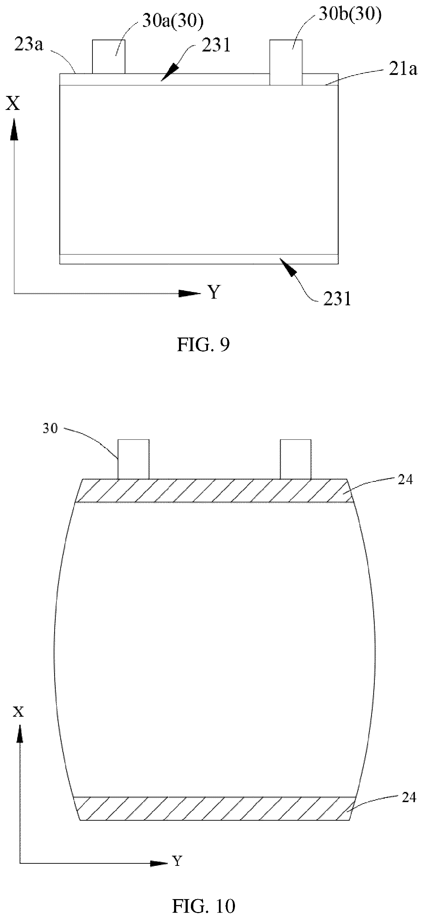

Referring to FIG. 9 and FIG. 10, according to some embodiments of this application, the first negative electrode plate 23a has the first regions 231 at two ends of the arc extension direction W of the secondary battery 100, two first insulators 24 are provided, and viewed in the thickness direction Z of the electrode assembly 20, each of the first insulators 24 and the corresponding first region 231 at least partially overlap.

The two first regions 231 correspond to the two first insulators 24 one by one, and each of the first insulators 24 and the corresponding first region 231 at least partially overlap, so that the burrs at the edge of the first negative electrode plate 23a are convenient to shield.

In the above-mentioned solution, the first negative electrode plate 23a has the first regions 231 at two ends of the arc extension direction W of the secondary battery 100, so as to meet Overhang in the arc extension direction W of the secondary battery 100. Each of the first insulators 24 and the corresponding first region 231 at least partially overlap, so as to play a shielding role on the burrs of the first negative electrode plate 23a in two different directions, and reduce the risk of the burrs making contact with the aluminum layer of the housing 10.

According to some embodiments of this application, an embodiment of this application further provides an electronic apparatus, including the secondary battery 100 provided according to any one of the above embodiments.

The electronic apparatus is an apparatus or system adopting the secondary battery 100 as a power supply, for example, Bluetooth headsets, wristbands, smart watches, and other smart wearable devices.

Although this application has been described with reference to preferred embodiments, various improvements may be made thereto and components thereof may be replaced with equivalents without departing from the scope of this application. Particularly, technical features mentioned in the embodiments may be combined in any manner as long as there is no structural conflict. This application is not limited to the specific embodiments disclosed in this specification, but includes all technical solutions falling within the scope of the claims.

**Claims**

1. A secondary battery (100), **characterized in that** the secondary battery (100) comprises:

    an electrode assembly (20), comprising a positive electrode plate (21), a separator (22), a negative electrode plate (23) and a first insulator (24); and
    a housing (10) accommodating the electrode assembly (20), the housing (10) comprising an aluminum layer (12); wherein,
    the secondary battery (100) is arc shaped;
    the separator (22) is arranged between the positive electrode plate (21) and the negative electrode plate (23), an electrode plate on the outermost layer of the electrode assembly (20) is a first positive electrode plate (21a), and an electrode plate adjacent to the first positive electrode plate (21a) is a first negative electrode plate (23a);
    along an arc extension direction of the secondary battery (100), the first negative electrode plate (23a) has a first region (231) beyond an edge of the first positive electrode plate (21a), the first insulator (24) is arranged on a first separator (22a) for separating the first negative electrode plate (23a) and the first positive electrode plate (21a), and viewed along a thickness direction of the electrode assembly (20), the first insulator (24) and the first region (231) at least partially overlap.

2. The secondary battery (100) according to claim 1, **characterized in that** the first insulator (24) is beyond an edge of the first negative electrode plate (23a) along the arc extension direction of the secondary battery (100).

3. The secondary battery (100) according to claim 1, **characterized in that** the first insulator (24) comprises a first portion (241) and a second portion (242), the first portion (241) is arranged on the first separator (22a), and the second portion(242) is arranged on the first positive electrode plate (21a).

4. The secondary battery (100) according to claim 1, **characterized in that** along the thickness direction of the electrode assembly (20), the first insulator (24) has a dimension of H1, the first separator (22a) has a dimension of H2, and 30 $\mu$m $\leq$ H1 + H2 $\leq$ 65.6 $\mu$m.

5. The secondary battery (100) according to claim 4, **characterized in that**,

$$6 \ \mu m \leq H1 \leq 15.5 \ \mu m;$$

and/or

$$6 \ \mu m \leq H2 \leq 15.5 \ \mu m.$$

6. The secondary battery (100) according to claim 1, **characterized in that** the first insulator (24) is an adhesive layer coated on the first separator (22a).

7. The secondary battery (100) according to claim 6, **characterized in that** the adhesive layer is one or more of a polyolefin adhesive layer, a rubber-based adhesive layer, or a cyanoacrylate-based adhesive layer.

8. The secondary battery (100) according to claim 1, **characterized in that** the first insulator (24) is an adhesive tape bonded to the first separator (22a).

9. The secondary battery (100) according to claim 8, **characterized in that** a peel strength between the adhesive tape and the first separator (22a) is greater than 0.1 N/mm.

10. The secondary battery (100) according to claim 1, **characterized in that** the housing (10) is an aluminum-plastic film, and the aluminum-plastic film comprises a protective layer (11), an aluminum layer (12) and a sealing layer (13) stacked together.

11. The secondary battery (100) according to claim 10, **characterized in that** the sealing layer (13) comprises at least one of polyethylene terephthalate, polyvinyl chloride, polyethylene or polypropylene; and/ or
the sealing layer (13) has a thickness of 20 $\mu$m to 40 $\mu$m.

12. The secondary battery (100) according to claim 1, **characterized in that** the secondary battery (100) further comprises tabs (30), and the tabs (30) are disposed at one end of the secondary battery (100) in the arc extension direction of the secondary battery (100).

13. The secondary battery (100) according to claim 12 **characterized in that** the electrode assembly (20) is of a laminated structure; and
the first negative electrode plate (23a) has two first regions (231) and two second regions (232) the two first regions (231)and the two second regions (232) are beyond the edge of the first positive electrode plate (21a) , the two first regions (231) are respectively disposed at two opposite ends of the first negative electrode plate (23a) along the arc extension direction of the secondary battery (100), the two second regions (232) are respectively disposed at other two opposite ends of the first negative electrode plate (23a);two first insulators (24) are provided on the positive electrode plate (21), the two first insulators (24) are oppositely arranged along the first direction, the electrode assembly (20) further comprises two second insulators (25) which are oppositely arranged along the second direction, the second insulators (25) are arranged on the first separator (22a), and viewed along the thickness direction of the electrode assembly (20), each of the first insulators (24) and the corresponding first region (231) at least partially overlap, and each of the second insulators (25) and the corresponding second region (232) at least partially overlap.

14. The secondary battery (100) according to claim 1, **characterized in that** the first negative electrode plate (23a) has the first regions (231) at two ends of the arc extension direction of the secondary battery (100), two first insulators (24) are provided on the positive electrode plate (21), and viewed in the thickness direction of the electrode assembly (20), each of the first insulators (24) and the corresponding first region (231) at least partially overlap.

15. An electronic apparatus, **characterized in that** the electronic apparatus comprises the secondary battery (100) according to any one of claims 1 to 14.

100

10

21a(21)
22a(22)  } 20
23a(23)

Z

W

FIG. 1

A

21a
22a
23a
21 22

Z

W

FIG. 2

FIG. 3

FIG. 4

EP 4 528 867 A1

B

24 242

241

21a

22a

23a

231

22

FIG. 5

10

11

12

13

FIG. 6

13

EP 4 528 867 A1

FIG. 7

FIG. 8

14

FIG. 9

FIG. 10

Europäisches
Patentamt

European
Patent Office

Office européen
des brevets

# EUROPEAN SEARCH REPORT

**Application Number**

EP 24 20 1703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 113 826 262 A (NINGDE AMPEREX TECHNOLOGY LTD) 21 December 2021 (2021-12-21) * claims 1-11 * * figures 1A-5C * * example 1 * | 1-15 | INV. H01M10/05 H01M10/058 H01M10/0587 H01M50/474 H01M50/486 |
| A,P | & EP 4 297 119 A1 (NINGDE AMPEREX TECHNOLOGY LTD [CN]) 27 December 2023 (2023-12-27) * claims 1-11 * * figures 1A-5C * * example 1 * ----- | 1-15 | H01M50/126 ADD. H01M50/586 H01M50/593 H01M50/129 |
| A | EP 3 703 148 A1 (QINGHAI CONTEMPORARY AMPEREX TECH LIMITED [CN]) 2 September 2020 (2020-09-02) * paragraphs [0031], [0036] - [0045] * * figures 2-7 * ----- | 1-15 | |
| A | US 2022/416360 A1 (PU YUJIE [CN]) 29 December 2022 (2022-12-29) * paragraphs [0100] - [0105] * * figures 5,6 * ----- | 1-15 | |

| TECHNICAL FIELDS SEARCHED (IPC) |
|---|
| H01M |

The present search report has been drawn up for all claims

| Place of search | Date of completion of the search | Examiner |
|---|---|---|
| Munich | 2 February 2025 | Haering, Christian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 20 1703

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2025

| Patent document cited in search report | | Publication date | Patent family member(s) | | Publication date |
|---|---|---|---|---|---|
| CN 113826262 | A | 21-12-2021 | CN | 113826262 A | 21-12-2021 |
| | | | EP | 4297119 A1 | 27-12-2023 |
| | | | JP | 2024508700 A | 28-02-2024 |
| | | | US | 2024213635 A1 | 27-06-2024 |
| | | | WO | 2022174369 A1 | 25-08-2022 |
| EP 3703148 | A1 | 02-09-2020 | CN | 110190340 A | 30-08-2019 |
| | | | EP | 3703148 A1 | 02-09-2020 |
| | | | US | 2020280043 A1 | 03-09-2020 |
| | | | US | 2021119306 A1 | 22-04-2021 |
| US 2022416360 | A1 | 29-12-2022 | CA | 3224900 A1 | 29-12-2022 |
| | | | CN | 115715438 A | 24-02-2023 |
| | | | EP | 4156398 A1 | 29-03-2023 |
| | | | JP | 7581376 B2 | 12-11-2024 |
| | | | JP | 2023534585 A | 10-08-2023 |
| | | | KR | 20230001010 A | 03-01-2023 |
| | | | US | 2022416360 A1 | 29-12-2022 |
| | | | WO | 2022266908 A1 | 29-12-2022 |

EPO FORM P0459

For more details about this annex : see Official Journal of the European Patent Office, No. 12/82